# EUROPEAN PATENT APPLICATION

(11) **EP 2 955 639 A1**
(43) Date of publication of application: **16.12.2015**
(21) Application number: 14748882.9
(22) Date of filing: 05.02.2014
(51) Int. Cl.: G06F 17/30, G06F 9/44

(54) **INFORMATION PROCESSING DEVICE, AND METHOD AND PROGRAM THEREFOR**

(30) Priority: 08.02.2013 JP 2013023537
(71) Applicant: Kabushiki Kaisha Toshiba, Minato-ku Tokyo 105-8001 (JP)
(72) Inventor: HOSOKAWA Akira, Tokyo 105-8001 (JP); MURAYAMA Hiroshi, Tokyo 105-8001 (JP)
(74) Representative: Noble, Nicholas
(86) International application number: PCT/JP2014/052685
(87) International publication number: WO 2014/123158

(57) **Abstract**

[OBJECT] The object is to flexibly perform data control of display, output or registration or the like without depending on an application or tool.

[MEASNS FOR SOLUTION]

An information processing device according to one aspect of the present invention comprises a database and a control executor. The database stores at least one instance of a control metaclass defining; a target category attribute that specifies an arbitrary category expressed as a metaclass; and a control attribute that defines control to be performed to an attribute defined in the category specified by the target category attribute. The control executor executes the control defined by the control attribute to the attribute of the category specified by the target category attribute, according to the instance of the control metaclass.

## Description

### [Technical Field]

An embodiment of the present invention relates to an information processing device and a method therefor, and a program.

### [Background Art]

In object oriented paradigm, in a hierarchical structure whose components are classes, a mechanism that a class inherits all properties of its superclass is provided. To each class, data that indicates an entity of the class is made to correspond, and individual data is generally called an instance. With a pair of the property that the class has and its value thereof as a minimum element, the instance is expressed by a combination of those pairs.

IEC 61360-ISO 13584 (PLIB) which is an International Standard regarding electronic catalogs of industrial products and components also has a data structure that a class inherits all properties of its superclass in an object-oriented manner. In IEC 61360-ISO 13584, schemas of ontological elements such as a class and a property are defined, and the each ontological element is defined according to them.

IEC 62656-1 and ISO/TS 13584-35 which is a subset thereof are International Standards that define an interface of a tabular format for expressing various ontologies including IEC 61360-ISO 13584 by a matrix form. According to the International Standard, description of an element for expressing a concept (ontology) such as a class or a property and description of an instance which is an entity of a class are all described by the tabular format in the same manner. That is, they are expressed in the matrix form of defining a category or a class of an ontological element as a domain class, developing an attribute of the category or a property of the class in a column direction, and describing the ontological element (instance) of the metaclass or class in individual rows. Each column is uniquely identified by the identifier of the corresponding attribute or property.

Hereinafter, a category of an ontological element is called a metaclass. For example, a category that has a class as an instance is called a class metaclass, and similarly a category that has a property as an instance is called a property metaclass. Also, the category defined in IEC 62656-1, that is, an ontology described by classes or properties or the like, is called a concept ontology.

According to IEC 62656-1, since all the metaclasses and classes are described according to the common format, there is a characteristic that basic data input/output and editing of the metaclasses and classes can be made common. Also, high plasticity is also a characteristic, and for example, utilization such as segmenting and utilizing only the needed ones from the attributes or the properties defined beforehand by the metaclasses or the classes, and utilization such as having a user freely add a column item other than the ones defined beforehand on the metaclasses and the classes or the like are possible.

Each metaclass has approximately 20 kinds or more of attributes. Also, the class that supplies the schema of product specifications usually has several tens to several hundreds of properties. However, in many cases, it is not needed to turn all the attributes or properties to an operation target, the required attribute or property is selectively determined, and various kinds of control as follows are performed.

In the case of displaying ontology data on a screen, by controlling display presence/absence and a display order of the attributes or properties according to interest of a user and a role on a workflow or the like, a display screen that is optimum for the user is provided. For example, in the case of browsing specification data of a product, items to see are different for a user of a design division and a user of a procurement division.

Also, in the case of outputting (transmitting to a terminal device, for example) the ontology data, reduction of a data size of output data and prevention of outflow of data that should not be essentially outputted can be expected by controlling output of a value of the attribute or the property to be outputted.

Also, in the case of storing the ontology data in a database, it is needed to perform appropriate data registration control according to the schema of a target database.

In the case of setting control to a concept ontology expressed by the tabular format of IEC 62656-1, utilization of a general method for a business form file or a database can be considered. For example, there is known a technology to output information including items desired by the user in an order desired by the user when a plurality of users access a shared database, by outputting information according to an output method customized for each user.

### [Citation List]

### [Patent Literature]

[Patent Literature 1] Japanese Patent Laid-Open No. 2003-150638

### [Summary of Invention]

### [Technical Problem]

However, in a conventional method for achieving the control, since an application or a tool provides control as an original function, it is effective only in a closed world such as a specific terminal or a system. Therefore, there is a problem that interoperability between users and between different kinds of systems is low or absent.

Also, in the conventional method for achieving the control, in the case of performing management in a database for which the schema is strictly fixed for example, a user cannot originally add an item or the like to the control.

One aspect of the present invention aims to flexibly perform data control of display, output or registration or the like.

### [Means for Solving Technical Problem]

An information processing device according to one aspect of the present invention comprises a database and a control executor.

The database stores at least one instance of a control metaclass defining; a target category attribute that specifies an arbitrary category expressed as a metaclass; and a control attribute that defines a control to be performed to an attribute defined in the category specified by the target category attribute.

The control executor executes the control defines by the control attribute to the attribute of the category specified by the target category attribute, according to the instance of the control metaclass.

### [Brief Description of Drawings]

[Figure 1] Figure 1 is a diagram illustrating a hardware configuration of a client terminal relating to an embodiment of the present invention.
[Figure 2] Figure 2 is a diagram illustrating a relation between a server and a client terminal relating to the present embodiment.
[Figure 3] Figure 3 is a diagram illustrating a functional block diagram of the client terminal relating to the present embodiment.
[Figure 4] Figure 4 is a diagram conceptually illustrating a hierarchical structure of a concept ontology whose components are classes and properties.
[Figure 5] Figure 5 is a diagram illustrating the components of the concept ontology illustrated in Figure 4 by a tabular format.
[Figure 6] Figure 6 is a diagram illustrating instances of the class relating to the present embodiment by the tabular format.
[Figure 7] Figure 7 is a diagram illustrating a structure of "has-a" relationship.
[Figure 8] Figure 8 is a diagram illustrating an example of expressing a "has-a" relationship of the classes illustrated in Figure 7 by the tabular format.
[Figure 9] Figure 9 is a diagram illustrating the instances of control metaclasses relating to the present embodiment by the tabular format.
[Figure 10] Figure 10 is a diagram illustrating a flowchart of the entire process of a control executor relating to the embodiment.
[Figure 11] Figure 11 is a diagram illustrating a flowchart of a display control process among processes of the control executor.
[Figure 12] Figure 12 is a diagram illustrating information to be displayed on a screen in the case of applying display control illustrated in Figure 9 to the concept ontology illustrated in Figure 5.
[Figure 13] Figure 13 is a diagram illustrating a flowchart of an output control process among the processes of the control executor.
[Figure 14] Figure 14 is a diagram illustrating information to be outputted in the case of applying output control illustrated in Figure 9 to the concept ontology illustrated in Figure 5.
[Figure 15] Figure 15 is a diagram illustrating a flowchart of a registration control process among the processes of the control executor.

### [Description of Embodiment]

Hereinafter, with reference to the drawings, an embodiment of the present invention will be described.

### (1) Configuration

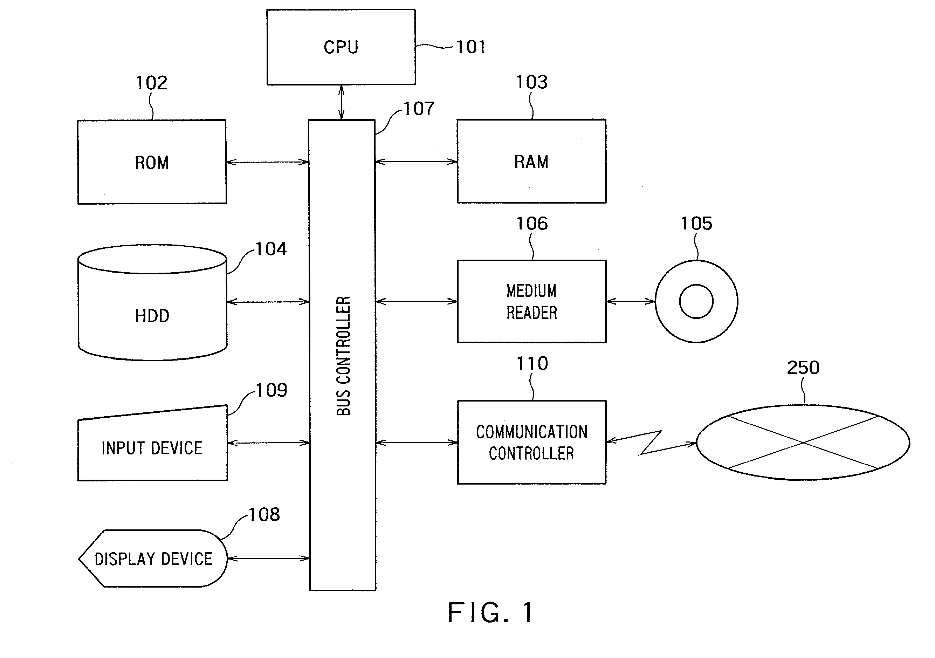

Figure 1 illustrates a hardware configuration of a client terminal (terminal device) that functions as an information processing device relating to the present embodiment.

The client terminal includes a controller such as a CPU (Central Processing Unit) 101 that controls the entire device, a storage device such as a ROM (Read Only Memory) 102 or a RAM (Random Access Memory) 103 that stores various kinds of data and various kinds of programs, and a medium reader 106 such as a drive unit for reading data recorded in an HDD (Hard Disk Drive) 104 that stores various kinds of data and various kinds of programs and an external storage device 105 such as a CD (Compact Disk), and a bus 107 that connects them, and is turned to a hardware configuration utilizing a normal computer. Also, to the client terminal, a display device 108 that displays information, an input device 109 such as a keyboard or a mouse that accepts instruction input of a user, and a communication controller 110 that controls communication with the outside through a network 250 are connected respectively by a wired or wireless.

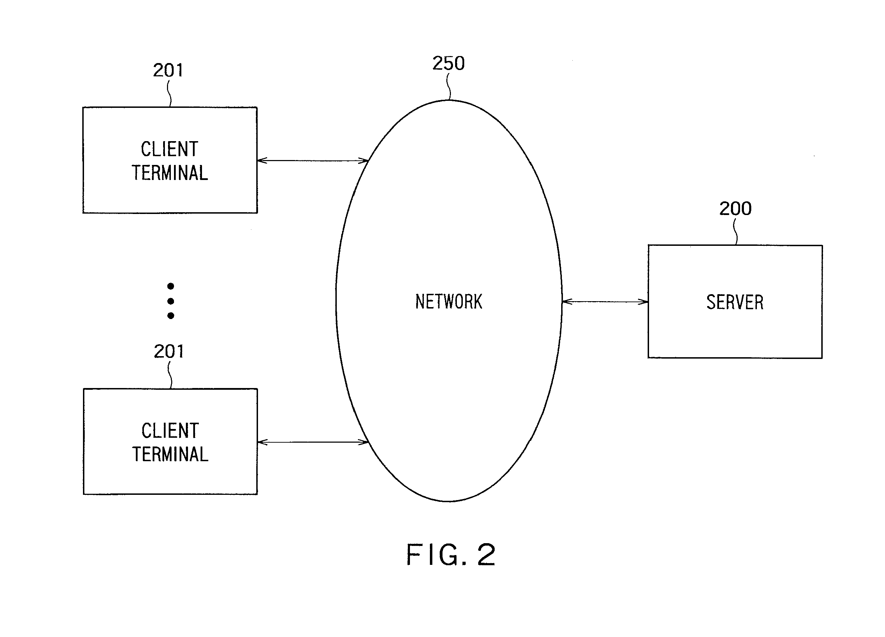

Figure 2 illustrates a relationship between a server and a client.

Individual client terminals 201 can communicate with each other through the network 250. Also, the individual client terminals 201 can communicate with a server 200 through the network 250. The individual client terminals 201 can register (store) data in a database inside the server 200 for example.

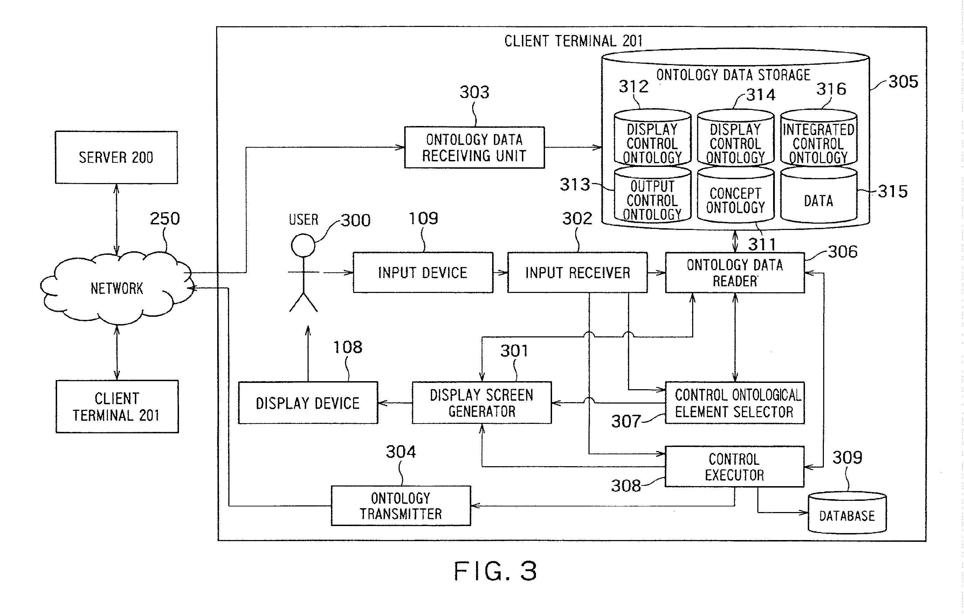

Figure 3 is a diagram illustrating a functional configuration of the client terminal 201. In the above-described hardware configuration, the CPU 101 of the client terminal 201 executes various kinds of programs stored in the storage devices 102 and 103, and the external storage device 105, so that various kinds of functions are achieved.

The client terminal 201 includes a display screen generator 301, an input receiver 302, an ontology data receiver 303, an ontology data transmitter 304, an ontology data storage 305, an ontology data reader 306, a control ontological element selector 307, a control executor 308, and a database 309. The client terminal 201 can communicate with the server 200 and the other client terminals through the network 250. A database may be provided inside the server as well.

Among the individual units, the display screen generator 301, the input receiver 302, the ontology data receiver 303, the ontology data transmitter 304, the ontology data reader 306, the control ontological element selector 307, and the control executor 308 are generated on the storage device such as the RAM 103 when the CPU 101 executes the programs. Also, the ontology data storage 305 is stored in the external storage device such as the HDD for example. Also, the database 309 is stored in the external storage device such as the HDD for example.

A user 300 inputs data and inputs an execution instruction of a control instruction through the input device 109 while browsing various kinds of data displayed on the display device 108.

The display screen generator 301 generates screen data for displaying concept ontologies, instances, and control ontologies, various kinds of screen data to be presented to the user 300 in the course of the individual processes, and the other relating screen data. The display screen generator 301 transfers the generated screen data to the display device 108 in a format that can be interpreted by the display device 108. Also, in order to store information displayed on a current display screen in the RAM 103, the display screen generator 301 sends the information to the ontology data reader 306.

The input receiver 302 interprets the control instruction inputted from a user through the input device 109, and calls the various kinds of processes.

The ontology data receiver 303 receives a concept ontology 311, data (instance) 315, and data of the control ontologies (a display control ontology 312, an output control ontology 313, a registration control ontology 314, and an integrated control ontology 316) directly or indirectly from the other client terminal or system through the network. The ontology data receiver 303 stores the received data in the ontology data storage 305. The ontology is sometimes called data dictionary, and it is assumed that the ontology described in the present embodiment includes the case of the data dictionary.

The ontology data storage 305 stores the concept ontology 311, the instance 315, and the control ontologies (the display control ontology 312, the output control ontology 313, the registration control ontology 314, and the integrated control ontology 316). The user may store these pieces of data in the ontology data storage 305 directly by an inputting operation to his/her own client terminal without receiving them from the other client terminal.

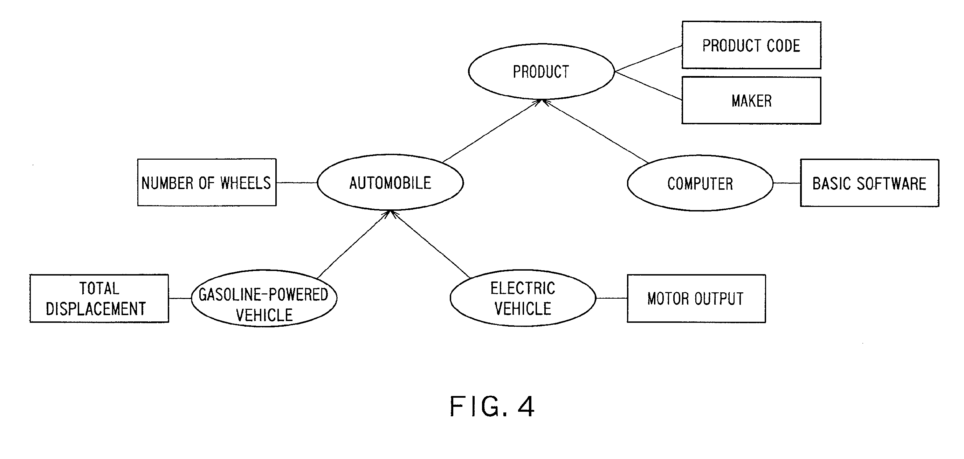

Figure 4 illustrates a structure of the concept ontology whose components are classes and properties, as an example of the concept ontology stored in the ontology data storage 305.

In the figure, each class is represented by an ellipse, and each property is represented by a rectangle. By a solid line arrow, an inheritance relationship between a class with a distal end as its superclass is represented. By a solid line without an arrow, the property that the class has is represented.

For example, a class "product" is the superclass of "automobile" and "computer". The class "product" has two properties of "product code" and "maker". Also, according to object oriented paradigm, all properties that a class has is inherited by its all subclasses. For example, in the figure, the class "automobile" has the two properties of "product code" and "maker" inherited from its superclass, in addition to a property "the number of wheels" that is defined and applied in itself.

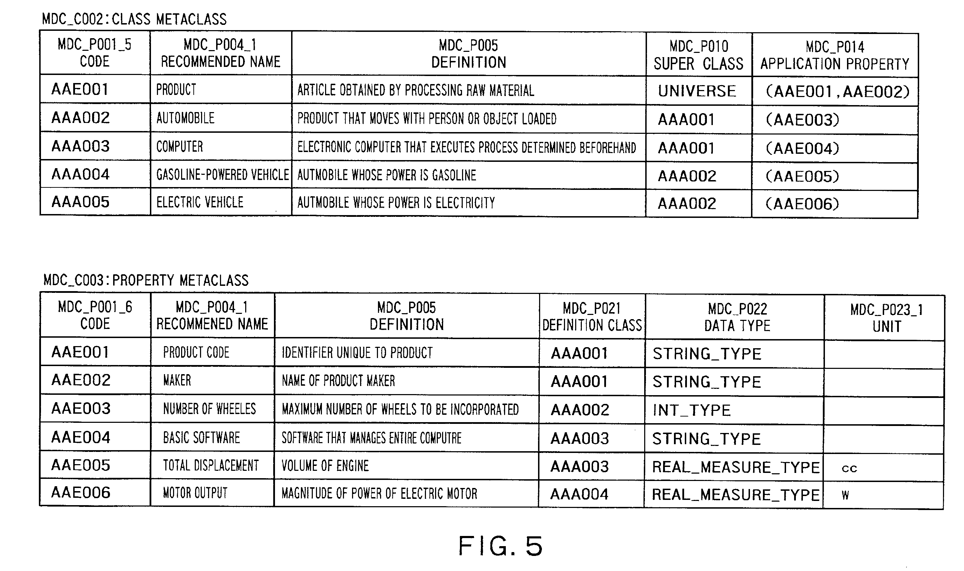

Figure 5 illustrates an example of expressing a class metaclass and a property metaclass that are categories of the classes and the properties illustrated in Figure 4 by a tabular format with attributes as indexes respectively, as an example of a storage form of the concept ontology stored in the ontology data storage 305.

The category of the class corresponds to the class metaclass, and the category of the property corresponds to the property metaclass. A label of "MDC_C002" is assigned as an identifier to the class metaclass, and a label of "MDC_C003" is assigned as an identifier to the property metaclass, as identification information. Tables of the individual categories have the plurality of attributes as indexes, respectively.

In the table of the class metaclass, columns to which five kinds of attributes that define the classes are allocated are prepared. Using these attributes as schema, each class is defined in each row. Each class is equivalent to the instance (ontological element) of the class metaclass.

Similarly, in the table of the properties, the columns to which six kinds of attributes that define the properties are allocated are prepared. Using these attributes as schema, each property of each row is defined. Each property is equivalent to the instance (ontological element) of the property metaclass.

In each table, the inheritance relationship between classes and the relationship between a class and a property are described by specifying an identifier (code) of each ontological element (see the columns of "application property" and "definition class").

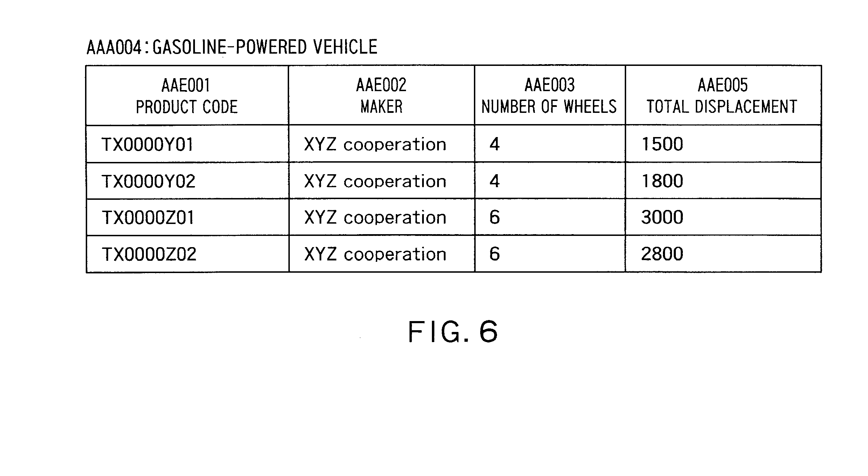

Figure 6 illustrates a table for describing the instances of the class of "gasoline-powered vehicle" among the classes illustrated in Figure 4, as an example of a storage form of the instances for which the concept ontology 311 stored in the ontology data storage 305 is the schema. To the class (category), a label of "AAA004" is allocated as an identifier (in Figure 5, the code of the gasoline-powered vehicle is "AAA004").

In the table, the columns to which four kinds of properties that "gasoline-powered vehicle" has are allocated are prepared. With these properties as the schema, the instances of "gasoline-powered vehicle" as individual specific products are described.

On the other hand, the concept ontology 311 stored in the ontology data storage 305 may have a composition relationship called "has-a" relationship in addition to a "is-a" relationship between the classes according to the object oriented paradigm as in Figure 4. The "has-a" relationship is a relationship that a class has another class as a part.

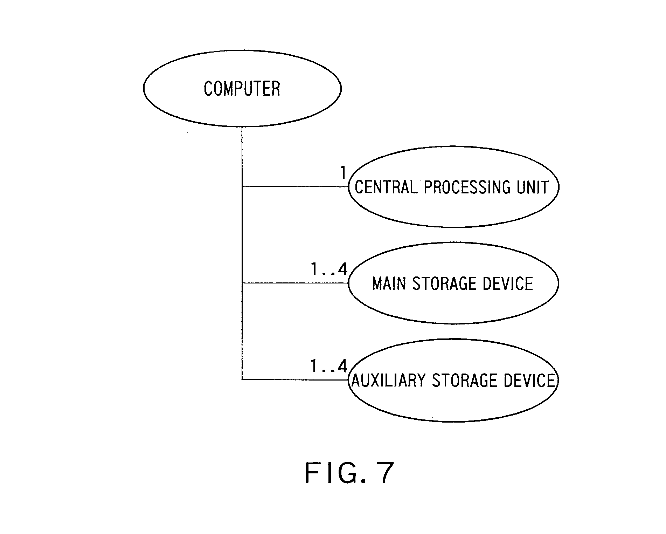

Figure 7 is a diagram illustrating a structure of "has-a". Similarly to Figure 4, the class is represented by an ellipse. An upper left ellipse represents a whole class, and three lower right ellipses represent its part classes. The whole class has the three part classes. That is, a class "computer" has, as the parts thereof, three classes of "central processing unit", "main storage device" and "auxiliary storage device". The whole class and its part classes are connected by solid lines. A numerical value described at a part class side end point of the solid line determines the number of the parts that can be held. In the example of Figure 7, it is indicated that the computer can hold one central processing unit, one to four main storage devices, and one to four auxiliary storage devices.

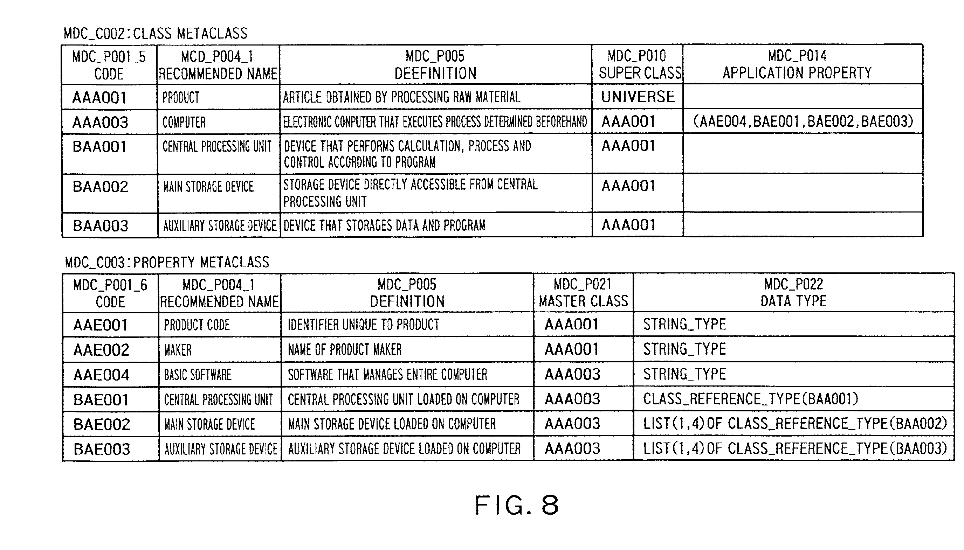

Figure 8 is a diagram illustrating an example of expressing the "has-a" relationship of the classes illustrated in Figure 7 by the tabular format similarly to Figure 5, as an example of the concept ontology 311 stored in the ontology data storage 305.

In the figure, in the table of the class metaclass, the total of five classes that are the four of the whole class "computer" and its part classes and the superclass "product" of the whole class "computer" are described. In the table of the property metaclass, in addition to the properties that characterize the classes, three properties that define the relationship between the whole class and its part classes are described as the individual properties.

For example, the relationship between the class "computer" and its part class "main storage device" thereof is described by the property identified with "BAE002". In a data type "CLASS_REFERENCE_TYPE" for specifying the part class, "BAA002" that is the identifier of the part class "main storage device" is referred to. Also, as a prefix of the data type, "LIST(1,4)" meaning that one to four "main storage devices" are provided is specified. By specifying these properties in a value of an attribute "MDC_P014" of the class "computer", the relationship between the whole class and its part classes is described.

In Figure 5 and Figure 8, the "is-a" relationship and the "has-a" relationship between classes according to the object oriented paradigm are separately described in order to simplify description, however, they may be described in a mixed manner or may be separately described.

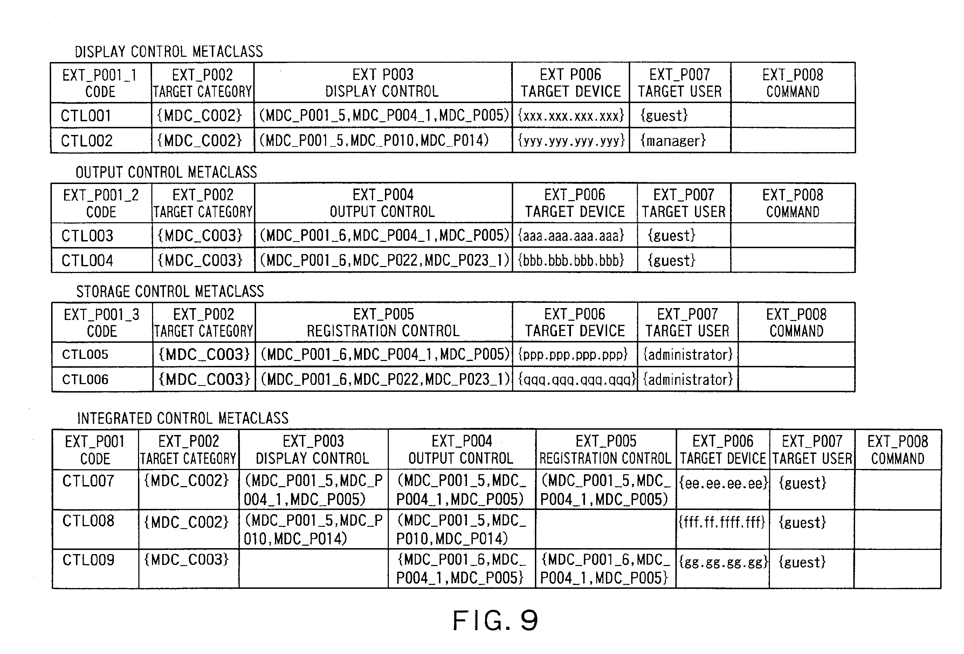

Figure 9 illustrates an example of a storage form of the control ontologies (the display control ontology, the output control ontology, the registration control ontology, and the integrated control ontology) stored in the ontology data storage 305.

By the same format as the format illustrated in Figure 5 and Figure 6, control metaclasses of four categories that are display control, output control, registration control and integrated control for which they are integrated are expressed by the tabular format with the attributes as the indexes similarly to Figure 5 and Figure 6.

In the table of the display control metaclass, six kinds of attributes are allocated. With these attributes as the schema, each display control in each row is defined as an instance of the display control metaclass. The display control metaclass and the individual instances thereof correspond to the display control ontology 312 in Figure 3.

A "code" attribute of the display control metaclass specifies a code to identify an instance of the display control metaclass. A "target category" attribute specifies the category (metaclass or class) of a control target. A "display control" attribute specifies the attribute or the property to be a target to perform the display control (for example, display or non-display at a display device) for the category. A "target device" attribute specifies a condition relating to a device to execute the display control, such as an identifier of the device to execute the display control for example. A "target user" attribute specifies a condition relating to a user to be a target to execute control, such as the user or a group or a role to which the user belongs for example. A "command" attribute specifies a process to be executed by an application. For example, a fixed process such as an arithmetic operation is performed to displayed data, and a result of the process is displayed.

In the table of the output control metaclass, six kinds of attributes are allocated. With these attributes as the schemas, each output control in each row is defined as the instance of the output control metaclass. The output control metaclass and the individual instances thereof correspond to the output control ontology 313 in Figure 3.

The "code" attribute in the output control metaclass specifies a code to identify an instance of the output control metaclass. The "target category" attribute specifies the category (metaclass or class) of the control target. An "output control" attribute specifies the attribute or the property to be a target to perform the output control (for example, transmission to the client terminal) for the category. The "target device" attribute specifies a condition relating to a device to execute the output control, such as an identifier of the device to execute the output control for example. The "target user" attribute specifies a condition relating to a user to be a target to execute the output control, such as the user or a group or a role to which the user belongs for example. The "command" attribute specifies a process to be executed by the application. For example, a fixed process such as an arithmetic operation is performed to read data, and a result of the process is outputted.

In the table of the registration control metaclass, the columns of six kinds of attributes are allocated. With these attributes as the schemas, each registration control (storage control) in each row is defined as the instance of the registration control metaclass. The registration control metaclass and the individual instances thereof correspond to the registration control ontology 314 in Figure 3.

The "code" attribute in the registration control metaclass specifies a code to identify an instance of the registration control metaclass. The "target category" attribute specifies the category (metaclass or class) of the control target. A "registration control" attribute specifies the attribute or the property to be a target to perform the registration control (for example, registration (storage) to the database) for the category. The "target device" attribute specifies a condition relating to a device to execute the registration control, such as an identifier of the device to execute the registration control for example. The "target user" attribute specifies a condition relating to a user to be a target to execute the control, such as the user or a group or a role to which the user belongs for example. The "command" attribute specifies a process to be executed by the application. For example, a fixed process such as an arithmetic operation is performed to read data, and a result of the process is registered.

In the table of the integrated control metaclass, the columns of eight kinds of attributes are allocated. With these attributes as the schemas, two or more (here, all) of the control among the display control, the output control and the registration control are defined in the individual rows. The integrated control metaclass and the individual instances thereof correspond to the integrated control ontology 316 in Figure 3. For the control described in the instance of the integrated control metaclass, one or more of the control among the display control, the output control and the registration control are described.

The "code" attribute in the integrated control metaclass specifies a code to identify an instance of the integrated control metaclass. The "target category" attribute specifies the category (metaclass or class) of the control target. The "display control" attribute specifies the attribute or the property to be a target to perform the display control for the category. The "output control" attribute specifies the attribute or the property to be a target to perform the output control for the category. The "registration control" attribute specifies the attribute or the property to be a target to perform the registration control for the category. The "target device" attribute specifies a target device to execute the control. The "target user" attribute specifies a user to be a target to execute the control or a group or a role to which the user belongs. The "command" attribute specifies a process to be executed by the application. In the case that the instance of the integrated control metaclass is specified, all of the display control, the output control and the registration control included in the instance may be executed, or the control desired to be executed among the control may be selected by the user.

The individual metaclasses of the display control, the output control, the registration control and the integrated control described above may have, in addition to the attributes described above, attributes originally added by the user.

Also, the individual metaclasses of the display control, the output control, the registration control and the integrated control may have all or part of the above-described target device attribute, target user attribute, command attribute and user extension attribute, or may have none.

In this way, the concept ontology 311, the instance 315 and the control ontologies (the display control ontology 312, the output control ontology 313, the registration control ontology 314, and the integrated control ontology 316) can be easily operated from the application capable of operating the concept ontology by being expressed all by the tabular format in the same manner.

For example, in the case of being stored in a file by a general business form application, by preparing the tables (see Figure 5, Figure 6 and Figure 9) respectively for each metaclass and each class of the concept ontology and each metaclass of the control ontology, these pieces of information can be stored and operated all on the same file.

According to requests from the display screen generator 301, the input receiver 302, the control ontological element selector 307 to be described later, and the control executor 308 to be described later, the ontology data reader 306 reads concept ontological elements, the instances, and control ontological elements stored in the ontology data storage 305, and stores them in the RAM 103.

The concept ontological elements are instances (that is, the class) of the class metaclass and instances (that is, the property) of the property metaclass in Figure 5 or the like, for example. The instances are instances of the class in Figure 6 or the like. The control ontological elements are instances (that is, a display control ontological elements) of the display control metaclass, instances (that is, an output control ontological elements) of the output control metaclass, instances (that is, a registration control ontological elements) of the registration control metaclass, and instances (that is, integrated control ontological elements) of the integrated control metaclass in Figure 9 or the like, for example.

Further, the ontology data reader 306 receives the information of the current display screen from the display screen generator 301, and stores it in the RAM 103.

When the control instruction specifying a control kind and a target category is received from the input receiver 302, the control ontological element selector 307 accesses the ontology data storage 305 through the ontology data reader 306. Then, for the target category, a list of applicable control is acquired. The category that can be specified may be a concept metaclass (for example, the class metaclass and the property metaclass in Figure 5), the class (for example, the class in Figure 6), or the control metaclass (for example, the display control metaclass, the output control metaclass, the registration control metaclass and the integrated control metaclass in Figure 9). In this way, the control metaclass itself can be the control target as well.

For example, in the case that the control kind is "display control" and the target category is the class metaclass, from the display control metaclass, "CTL001" and "CTL002" including the identifier ("MDC_C002" in this example) of the class metaclass for the target category are specified, and the display control ontological elements (the instances of the display control metaclass) of these two are extracted. Similarly, "CTL007" and "CTL008" including the identifier of the class metaclass for the target category are specified from the integrated control metaclass, and the integrated control ontological elements (the instances of the integrated control metaclass) of these two are extracted.

There is a case that the target category (the concept metaclass, the class, or the control metaclass) specified by the control instruction has a super category according to the object oriented paradigm. At the time, the control ontological element selector 307 may simultaneously or separately extract the control ontological element corresponding to the super category so as to be applicable to the target category. That is, in the case that the super category has a sub category, the control ontological element of the super category may be inherited and applied to the sub category.

Also, in the case that the target category is equivalent to apart of another category due to the "has-a" relationship as a whole category, the control ontological element of the whole category may be simultaneously or separately extracted so that the control ontological element of the whole category can be applied also to the target category as a part. That is, in the case that the whole category has the category as a part, the control ontological element of the whole category may be applied to its part category.

Thereafter, a screen for making a selection by the user 300 with the extracted control ontological elements as choices is displayed at the display device 108 through the display screen generator 301. The user 300 determines the control ontological element to be actually applied from the choices of the displayed control ontological elements, and selects it using the input device 109. The information of the selected control ontological element is transmitted to the input receiver 302 through the input device 109, and the identifier of the control ontological element is transmitted to the control executor 308.

When the identifier of the control ontological element selected by the user 300 is received from the input device 109, the control executor 308 executes the control according to control contents defined by the specified control ontological element through the ontology data reader 306.

That is, in the case that the control kind is "display control", for the target category, current display data stored in the RAM 103 is updated so as to be the content (items) defined by the display control attribute, and the updated display data is sent to the display screen generator 301, and displayed to the user through the display device 108.

Also, in the case that the control kind is "output control", among the data of the target category stored in the RAM 103, the data of the content (items) defined by the output control attribute is extracted and sent to the ontology transmitter. The ontology transmitter 304 outputs (transmits) the data inputted from the control executor 308 through the network 250 to the other client terminal or the server. A transmitting destination may be specified separately by some method beforehand or may be specified by a command.

Also, in the case that the control kind is "registration control", among the data of the target category stored in the RAM 103, the data of the content (items) defined by the registration control attribute is extracted and registered to the file or the database 309. A procedure of these processes will be described in detail with a flowchart to be described later.

### (2) Operation

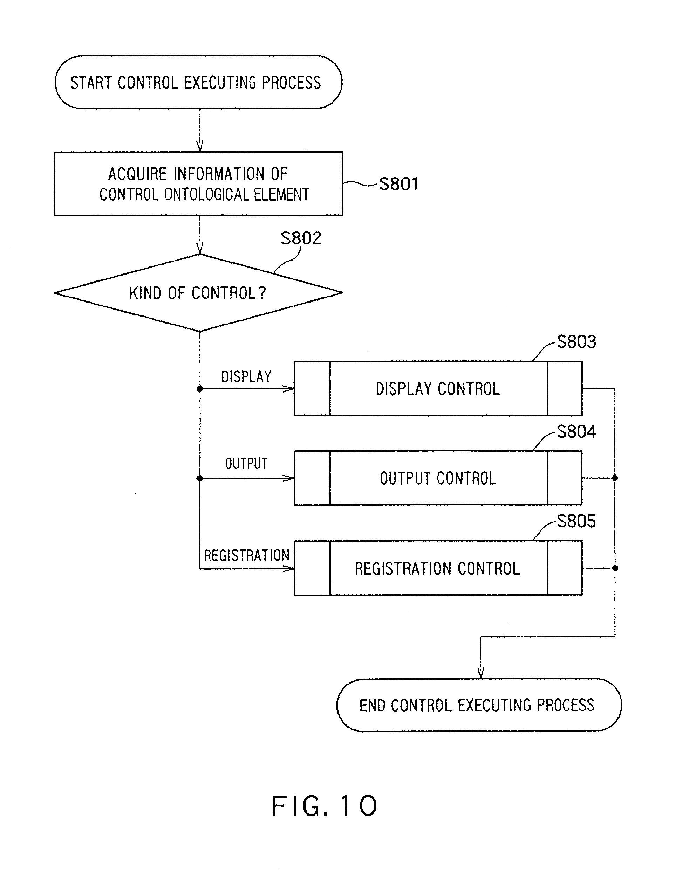

Figure 10 illustrates the process of the control executor 308 by a flowchart.

When the control instruction is received from the input receiver 302, the control executor 308 acquires the information (the information of the control ontological element or the like) specified by the control instruction from the ontology data reader 306 (S801).

On the basis of the acquired information, a kind of the control specified by the user 300 is discriminated (S802), and the process of the display control (S803) in the case of "display control", the process of the output control (S804) in the case of "output control", and the process of the registration control (S805) in the case of "registration control" are executed respectively. When the process of the display control, the output control or the registration control is ended, the control executor 308 ends a control executing process. In the case of "integrated control", these individual processes are all or selectively executed.

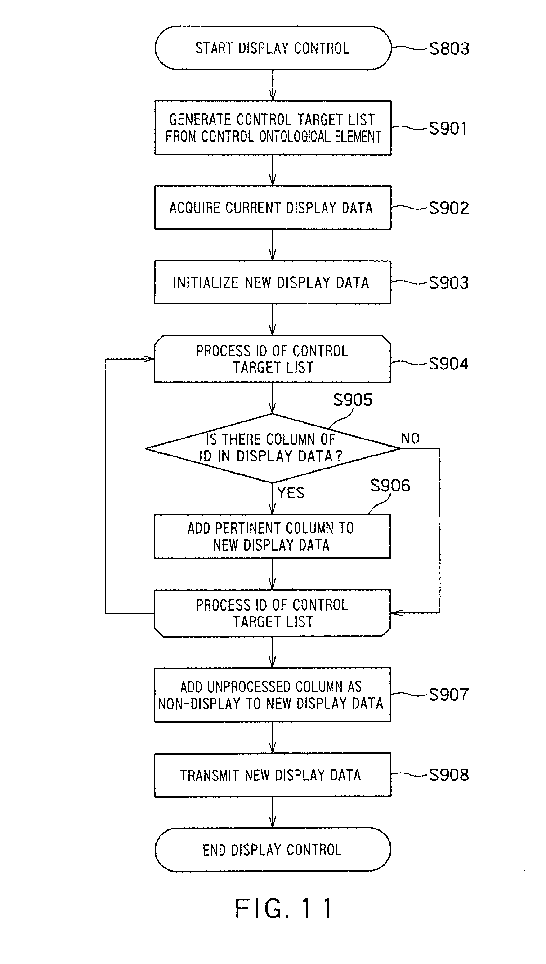

Figure 11 is a flowchart illustrating a process flow of the process of the display control (S803).

In the process of the display control, for the target category specified from the user 300, a list of values of the "display control" attributes of the control ontological elements selected by the user 300, that is, the IDs of the columns to be displayed, is acquired first, and a control target list storing a list of the acquired IDs is generated (S901).

Next, the ontology data reader 306 acquires the current display data of the target category from the display screen generator 301 (S902). The current display data includes the data for the individual columns (the identifiers of the attributes or the properties) of the target category, and includes setting of display or non-display for each column. For the data actually displayed at the display device 108, the setting of display between these is applied.

Next, a storage area for storing new display data after being updated is prepared on the RAM 103, and initialization is performed (S903).

Through the above-described preprocess, the following process is executed to each identifier in the control target list, that is, the column of the control target (S904).

In the case that the column that coincides with the identifier exists in the current display data (YES in S905), the column is added to the new display data. Here, in the case that a state of the column is "not displayed" in the current display data, the state is changed to "displayed". On the other hand, in the case that the column that coincides with the identifier does not exist in the current display data, the process regarding the identifier is skipped, moving to the process of the next identifier (NO in S905).

When the process of all the identifiers in the control target list is ended, unprocessed columns of the current display data are added to the new display data, and the states of these are set to the "not displayed" (S907).

Finally, the new display data is sent to the display screen generator 301, the screen displayed at the display device 108 is updated, and the process is ended (S908). The display device 108 may control the state "displayed" and "not displayed" based on the setting of "displayed" and "not displayed", or only the data to be displayed may be sent to the display device 108 to display the data.

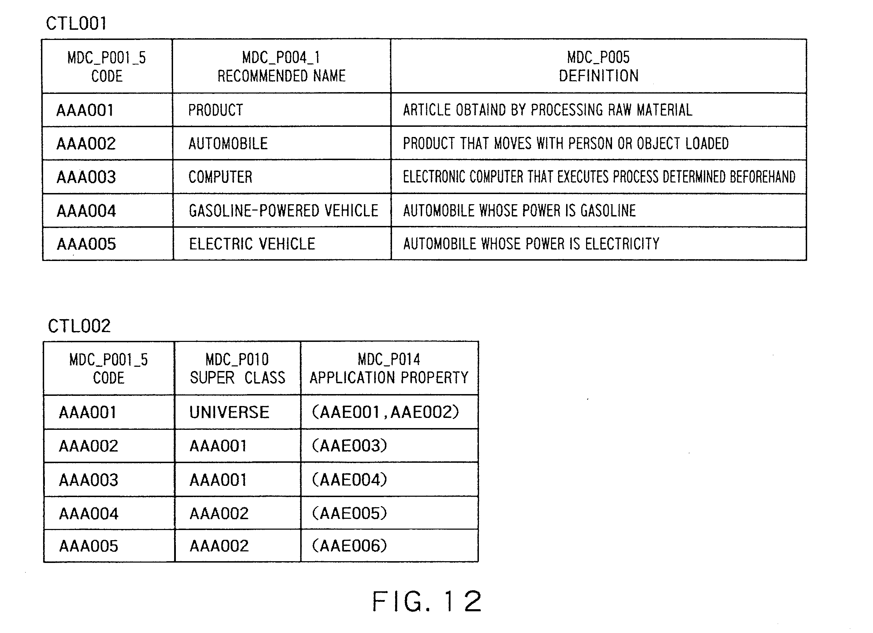

Figure 12 illustrates a table to be displayed at the display device 108 in the case of applying the two control ontological elements of the display control metaclass in Figure 9 respectively to the table of the class metaclass in Figure 5. In the case that the user 300 specifies the display control ontological element "CTL001", according to the values of the "display control" attributes of the ontological element, a table that displays only "MDC_P001_5", "MDC_P004_1" and "MDC_P005" is displayed at the display device 108. On the other hand, in the case that the user 300 specifies display control ontological element "CTL002", according to the values of the "display control" attributes of the ontological element, a table that displays only "MDC_P001_5", "MDC_P010" and "MDC_P014" that are the display control targets is displayed at the display device 108.

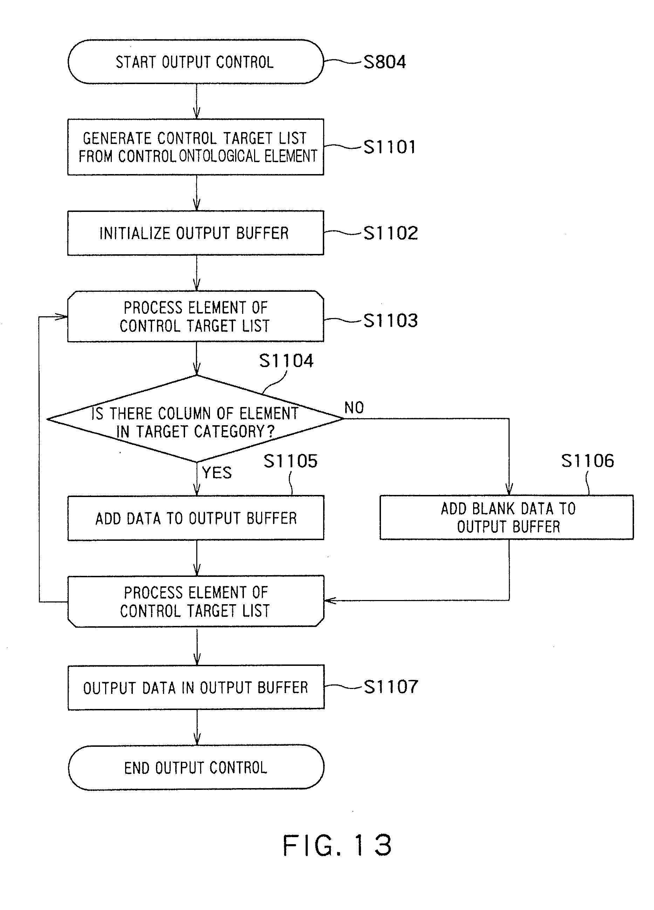

Next, Figure 13 illustrates a flowchart of the process of the output control process S804.

In the process of the output control, for the target category specified by the user 300, a list of values of the "output control" attributes of the control ontological elements selected by the user 300, that is, the identifiers of the columns to be displayed, is acquired first, and a control target list including the identifiers is generated (S1101). Next, an output buffer is initialized (S1102). Through the above-described preprocess, the following process is executed to each identifier stored in the control target list (S1103).

In the case that the column that coincides with the identifier exists in the table of the target category (YES in S1104), the data is added to the output buffer (S1105). On the other hand, in the case that the column that coincides with the ID does not exist in the table (NO in S1105), blank data is added to the output buffer so as to output a blank column that has the control target column as an index but des not have a value (S1106). In the case that the column that coincides with the identifier does not exist in the table, the process to the identifier may be omitted without outputting the blank column to the output buffer.

When the process of all the identifiers in the control target list is ended, the data of the current output buffer is sent to the ontology data transmitter 304, and the process is ended (S1107). The ontology data transmitter 304 transmits the data to the transmitting destination (the other terminal device or the server or the like) specified beforehand, or specified by the command.

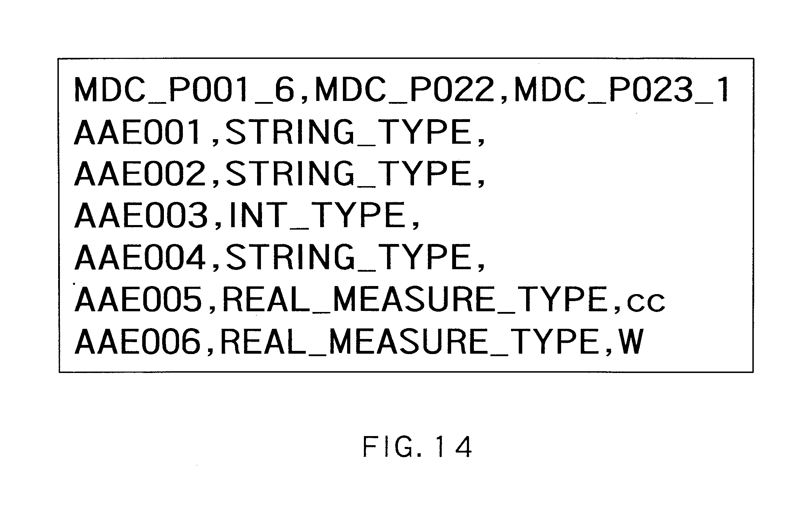

Figure 14 illustrates an example of output data to be sent to the ontology data transmitter 304 in the case of applying the second control ontological element ("CTL004") of the output control metaclass in Figure 9 to the table of the property metaclass in Figure 5. The output data of this example has a CSV (COMMA SEPERATED VALUE) format that can be inputted and outputted by many applications. This example is an example in the case that the user 300 specifies the output control ontological element "CTL004". By performing the process illustrated in Figure 13, the data of the individual columns of "MDC_P001_5", "MDC_P022" and "MDC_P023_1" that are the output control targets is prepared in the output buffer and sent to the ontology data transmitter 304.

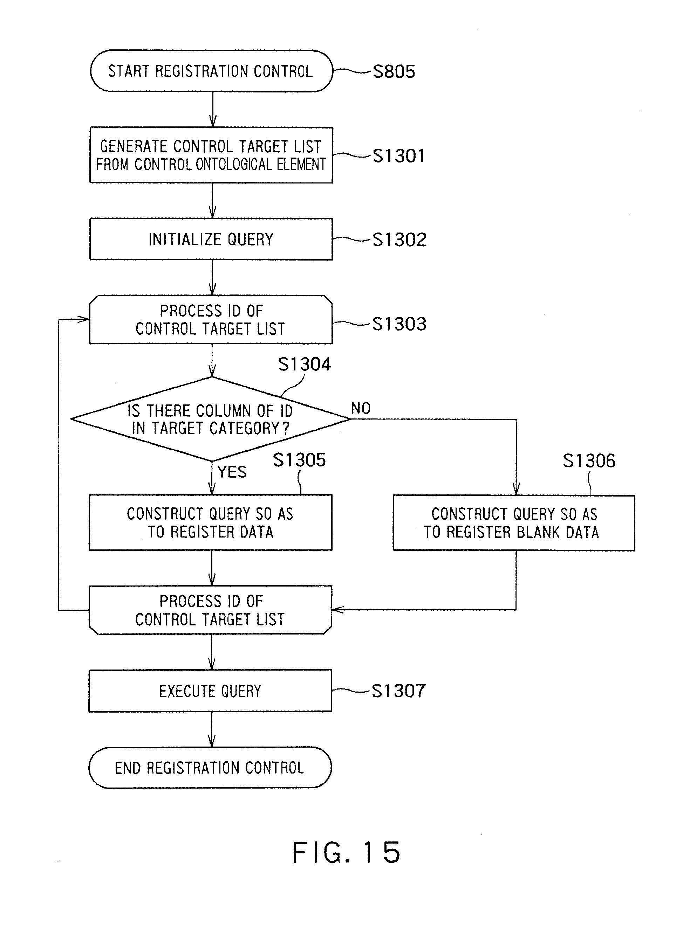

Next, Figure 15 illustrates a flowchart of the process of the registration control process S805.

In the process of the registration control, for the target category specified by the user 300, values of the "registration control" attributes of the control ontological elements selected by the user 300 are acquired, and a control target list storing the values is prepared (S1301). Next, a query suitable for the target database such as "SQL" or "XQuery" for describing a registration instruction is initialized (S1302). Through the above-described preprocess, the following process is executed to each identifier stored in the control target list (S1303).

In the case that the column that coincides with the identifier exists in the table of the target category (YES in S1304), an instruction is added to the query so as to register (store) the data of the column in the database 309 (S1305). On the other hand, in the case that the column that coincides with the identifier does not exist in the table (NO in S1304), an instruction is added to the query so as to register (store) a blank column that has the control target column as an index but does not have a value in the database 309 (S1306).

When the process of all the identifiers in the control target list is ended, the above-described query is executed, and the database 309 is updated (S1307). In the case that the column that coincides with the identifier does not exist in the table, the process to the identifier may be omitted without constructing the query to register the blank column.

### (3) Effects

For each control of display, output and registration uniquely described for each application or tool conventionally, the control metaclass (control ontology) defined as an ontology similarly to the concept ontology can be prepared and exchanged (transmitted and received to/from the other client terminal). When the application or the tool can process the concept ontology and the instances thereof, each control described above can be easily performed on the basis of the control ontology. It is not needed to separately prepare a special executing environment (program) in order to perform the control.

Also, a characteristic that a description format of the concept ontology has, plasticity that a user can uniquely add or apply an item in the table format of IEC 62656-1 or the like for example, can be applied also to the definition (see Figure 9) of the control, and extension therefor can be easily reflected on the application and the tool.

Also, when exchanging the concept ontology or the instance in a peer-to-peer manner between devices such as terminal devices, the definition of the control in consideration of the configuration of the information that both devices have can be easily added, and serviceability of an exchange system increases.

As above, according to the present embodiment, the flexible definition and exchange of the control independent of the application and the tool can be achieved, and improvement of operability of the control (the display, the output and the registration) relating to the concept ontology and the instance can be achieved.

### [Modifications]

### <Modification 1>

In the embodiment described above, the configuration may be such that various kinds of programs to be executed in the client terminal 201 are provided by being downloaded through the network onto a computer connected to the network such as the Internet. Also, the configuration may be such that the various kinds of programs are provided by being recorded in a computer-readable recording medium such as a CD-ROM, a flexible disk (FD), a CD-R, or a DVD (Digital Versatile Disk) in a file of an installable format or an executable format.

### <Modification 2>

In the embodiment described above, the client terminal 201 is described as an example, however, without being limited thereto, implementation may be performed in a form of a server/client system. In this case, the configuration may be such that all or part of functions that the above-described client terminal 201 has are achieved on a server side, and the configuration may be such that the functions that the above-described client terminal 201 has are achieved by the client terminal 201 communicating with the server 200 through a WEB browser for example.

### <Modification 3>

In the embodiment described above, the hierarchical structure of the ontologies that the ontology data storage 305 has is illustrated by a simple tree in Figure 4, however, without being limited thereto, other various hierarchical structures may be provided. For example, the hierarchical structure such as "multiple inheritance" of having a plurality of superclasses or "partial inheritance" formed of a relationship of importing some properties though it is not a strict super-sub relationship may be provided.

Also, the hierarchical structure of the ontologies may have a flat structure without hierarchies as a special case of the hierarchical structure. That is, no class may be a subclass of another class and may have only the property defined by itself.

### <Modification 4>

In the embodiment described above, the "target category" attribute that the display control metaclass, the output control metaclass, the registration control metaclass and the integrated control metaclass have may simultaneously specify a plurality of targets (identifiers).

### <Modification 5>

In the embodiment described above, the display data stored by the ontology data reader 306 has all the columns of the target category for simplification of the process, and the screen to be displayed to the user 300 is set by setting the display/non-display of these columns. However, this is just one embodiment, and for example, the process of S907 may be omitted, and the columns of "not displayed" may not be defined as the "not displayed" and may be neglected. In this case, when performing the processes of S905 and S906, in the case that the column is omitted in the display data, the information of the column stored in the ontology data storage 305 may be acquired through the ontology data reader 306, and new display data may be prepared using it.

### <Modification 6>

In the embodiment described above, in the case that one or the plurality of control ontological elements are defined in the control ontology (Figure 9) respectively for each category of the concept ontology, the user may be made to select one control ontological element through a selecting screen. In this case, the ontology data reader 306 loads the selected control ontological element, and the control executor 308 performs the process. The present modification 6 is described in the above-described embodiment as well.

### <Modification 7>

In the embodiment described above, in the case that the target category does not have the attribute (or the property) that coincides with the value in the process of the value specified by the "output control" attribute and the "registration control" attribute respectively of the selected control ontological element, for the process of the output control and the registration control, blank data that has the information of the control target as an index but does not have the value is outputted and registered. As a different method, it is also possible to adopt a method of not outputting or registering the blank data (that is, neglecting the value not having the coincident attribute). The present modification 7 is simply described also in the embodiment described above.

### <Modification 8>

The control ontological element (the instance of the control metaclass) may be applied also to a subcategory (a superclass in the inheritance relationship, for example) of the category specified by the target category attribute of the control ontological element. Also, the control ontological element may be applied also to a subcategory (the class in the "has-a" relationship) to be a part owned by the category specified by the target category attribute of the control ontological element. The present modification 8 is described also in the embodiment described above.

### <Modification 9>

In the embodiment described above, the class metaclass, the property metaclass, and the class or the like are mainly described as the categories, however, categories of "Enumeration", "Term", "Data type", "Document", "Unit of measure" or the like are also possible.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing device comprising:
a database that stores at least one instance of a control metaclass defining
a target category attribute that specifies an arbitrary category expressed as a metaclass, and
a control attribute that defines a control to be performed to an attribute defined in the category specified by the target category attribute; and
a control executor that executes the control defined by the control attribute to the attribute of the category specified by the target category attribute, according to the instance of the control metaclass.

2. The information processing device according to claim 1,
wherein the control attribute is a display control attribute that defines a display control to a display device, and
wherein the control metaclass is a display control metaclass that defines the target category attribute and the display control attribute.

3. The information processing device according to claim 1,
wherein the control attribute is an output control attribute that defines an output control to an external device, and
wherein the control metaclass is an output control metaclass that defines the target category attribute and the output control attribute.

4. The information processing device according to claim 1,
wherein the control attribute is a registration control attribute that defines a registration control to a storage device, and
wherein the control metaclass is a registration control metaclass that defines the target category attribute and the registration control attribute.

5. The information processing device according to claim 1,
wherein the control metaclass is an integrated control metaclass that defines
the target category attribute, and
at least two of a display control attribute that defines a display control in a display device, an output control attribute that defines an output control to an external device, and a registration control attribute that defines a registration control to a storage device.

6. The information processing device according to any one of claims 1 to 5,
wherein the category and the control metaclass are described by a tabular format.

7. The information processing device according to any one of claims 1 to 6,
wherein the control metaclass defines a target device attribute that specifies a condition of a device, and
wherein the control executor executes the control only when the information processing device satisfies the condition specified by the target device attribute.

8. The information processing device according to any one of claims 1 to 7,
wherein the control metaclass defines a target user attribute that specifies a condition regarding a user, and
wherein the control executor executes the control only when the user satisfies the condition specified by the target user attribute.

9. The information processing device according to any one of claims 1 to 8,
wherein the control metaclass defines a command attribute that specifies a command or an application, and
wherein the control executor executes the command or the application specified by the command attribute.

10. The information processing device according to any one of claims 1 to 9,
wherein the control is applied also to a subcategory of the category specified by the target category attribute of the instance of the control metaclass.

11. The information processing device according to any one of claims 1 to 10,
wherein the control is applied also to a subcategory to be a component owned by the category specified by the target category attribute of the instance of the control metaclass.

12. The information processing device according to any one of claims 1 to 11,
wherein the target category attribute specifies a class instead of a metaclass,
wherein the control attribute determines a control to be performed to a property defined in the category specified by the target category attribute, and
wherein the control executor executes the control determined by the control attribute to the property of the category specified by the target category attribute.

13. An information processing method comprising:
accessing a database that stores at least one instance of a control metaclass defining
a target category attribute that specifies an arbitrary category expressed as a metaclass, and
a control attribute that defines a control to be performed to an attribute defined in the category specified by the target category attribute; and
executing the control defined by the control attribute to the attribute of the category specified by the target category attribute, according to the instance of the control metaclass.

14. A program which causes a computer to execute processing comprising:
accessing a database that stores at least one instance of a control metaclass defining
a target category attribute that specifies an arbitrary category expressed as a metaclass, and
a control attribute that defines a control to be performed to an attribute defined in the category specified by the target category attribute; and
executing the control defined by the control attribute to the attribute of the category specified by the target category attribute, according to the instance of the control metaclass.
